# EUROPEAN PATENT APPLICATION

(11) **EP 2 685 545 A1**
(43) Date of publication of application: **15.01.2014**
(21) Application number: 12757333.5
(22) Date of filing: 29.02.2012
(51) Int. Cl.: H01M 10/50, B60K 1/04, B60L 11/18, H01M 2/10

(54) **BATTERY MODULE**

(30) Priority: 11.03.2011 JP 2011054086
(71) Applicant: Nissan Motor Co., Ltd, Yokohama-shi, Kanagawa 221-0023 (JP)
(72) Inventor: KINOSHITA, Yukiko, Atsugi-shi Kanagawa 243-0123 (JP); TODOROKI, Naoto, Atsugi-shi Kanagawa 243-0123 (JP)
(74) Representative: Hoefer & Partner
(86) International application number: PCT/JP2012/055124
(87) International publication number: WO 2012/124481

(57) **Abstract**

In a vehicle-mounted battery of the present invention, thin heater modules (21, 22, 23) are arranged in such a way as to face a side surface including a side along a stacking direction of battery shells (12), of a battery module (13) including the plural battery shells (12) stacked one on top of another and each having the shape of a rectangular parallelepiped having three sides.

## Description

### FIELD OF THE INVENTION

The present invention relates to a battery module formed of plural battery shells stacked one on top of another.

### BACKGROUND OF THE INVENTION

A battery module such as is described in Patent Literature 1, for example, has heretofore been known as a battery module including a thin heater module.

In the thin heater module described in Patent Literature 1, a heater body is in close contact with an outer side surface of a case for a battery pack formed of many battery modules housed therein. Then, a heat insulating sheet material is interposed between the heater body and a heater unit case facing the heater body.

### CITATION LIST

### PATENT LITERATURE

Patent Literature 1: Japanese Patent Application Publication No. 2008-186621

### DISCLOSURE OF THE INVENTION

However, the thin heater module described in Patent Literature 1 is configured such that the case for the battery pack is heated by the heater body and the battery modules are indirectly heated by conduction of heat from the case for the battery pack to the battery modules. This leads to the problem of impairing heating efficiency of the battery modules.

An object of the present invention is to provide a battery module capable of enhancing heating efficiency.

In order to solve the foregoing problem, in a battery module of the present invention, the battery module including plural battery shells each formed in the shape of a rectangular parallelepiped and stacked one on top of another is provided with a heater module for heating the battery module, arranged in such a way as to face a side surface including a side along a stacking direction of the battery shells.

### BRIEF DESCRIPTION OF DRAWINGS

[Fig. 1] Fig. 1 is a side view of a vehicle, illustrating a battery pack according to an embodiment of the present invention as arranged under a floor panel.
[Fig. 2] Fig. 2 is a plan view of Fig. 1, illustrating the vehicle with the floor panel removed.
[Fig. 3] Fig. 3 is an enlarged view of the battery pack illustrated in Fig. 2.
[Fig. 4] Fig. 4 is a schematic perspective view of the battery pack according to the embodiment of the present invention.
[Fig. 5] Fig. 5 is a schematic perspective view illustrating a second battery module according to the embodiment of the present invention.

### DESCRIPTION OF EMBODIMENTS

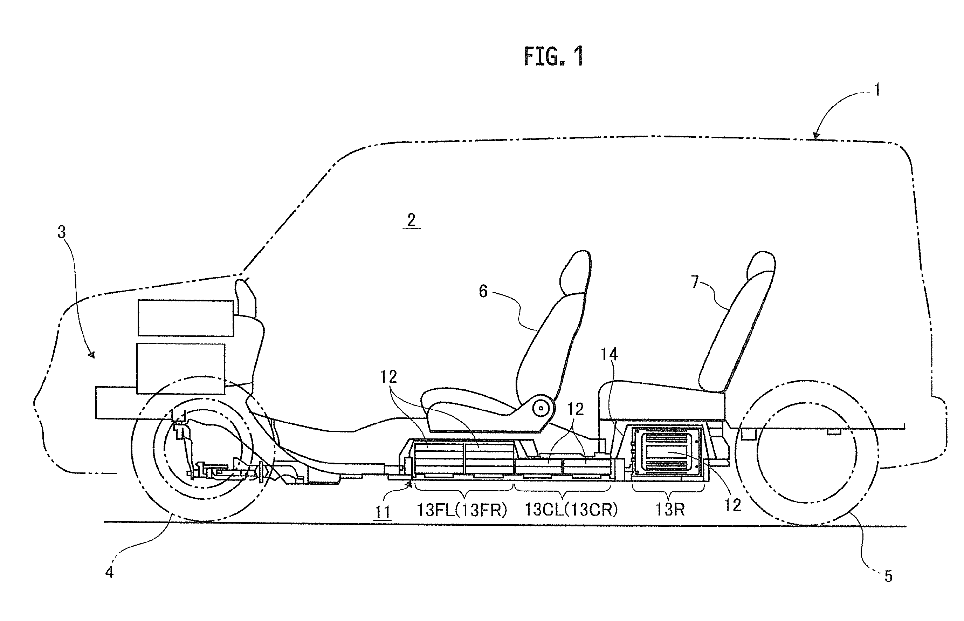

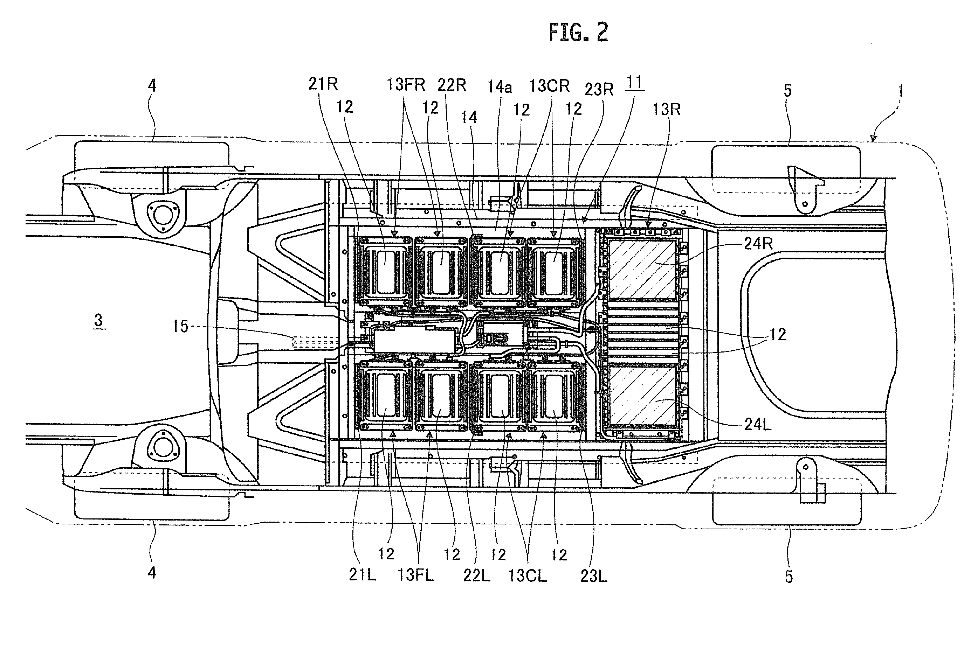

Firstly, a battery pack illustrated in Figs. 1 to 3 will be described. In Figs. 1 and 2, reference numeral 1 denotes a vehicle body; 2, a vehicle interior; 3, a motor room in which an electric motor for traveling is mounted; 4, left and right front wheels; 5, left and right rear wheels; 6, front seats; 7, rear seats; and 11, a battery pack.

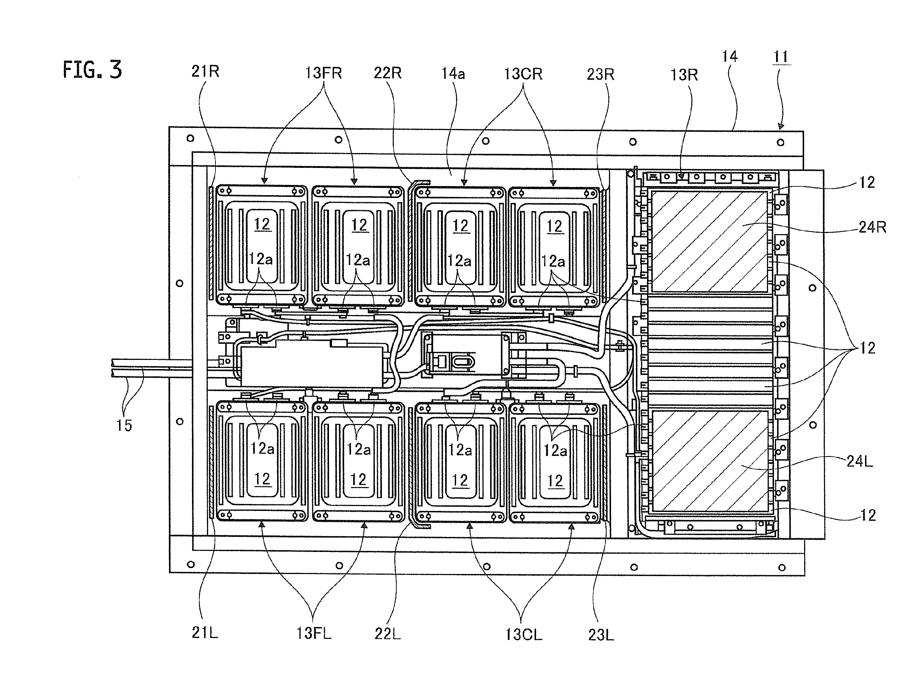

The battery pack 11 is configured as a unit formed of first battery modules 13FL, 13FR arranged on the front side in a vehicle longitudinal direction, second battery modules 13CL, 13CR arranged on the center side in the vehicle longitudinal direction, and a third battery module 13R arranged on the rear side in the vehicle longitudinal direction. The battery modules 13FL, 13FR, 13CL, 13CR, 13R are arranged under a floor panel in their positions housed in a battery pack case 14 illustrated in Fig. 3.

More specifically, as illustrated in Figs. 1 and 2, the battery pack 11 is formed of the first battery modules 13FL, 13FR arranged below the left and right front seats 6, the third battery module 13R arranged below the left and right rear seats 7, and the second battery modules 13CL, 13CR arranged directly under the floor panel between the left and right front seats 6 and the left and right rear seats 7.

As illustrated in Figs. 1 to 3, the front left first battery module 13FL is formed of a longitudinal side-by-side arrangement of two battery modules each formed of a vertical stacking of four battery shells 12 in a horizontal position. Likewise, the front right first battery module 13FR is formed of a longitudinal side-by-side arrangement of two battery modules each formed of a vertical stacking of four battery shells 12 in a horizontal position.

As illustrated in Figs. 1 to 3, the rear third battery module 13R is formed of many battery shells 12 stacked in a vertical position along a vehicle width direction in such a way as to have substantially the same length as the overall length of the rear seats 7.

As illustrated in Figs. 1 to 3, the central left second battery module 13CL is formed of a longitudinal side-by-side arrangement of two battery modules each formed of a vertical stacking of two battery shells 12 in a horizontal position. Likewise, the central right second battery module 13CR is formed of a longitudinal side-by-side arrangement of two battery modules each formed of a vertical stacking of two battery shells 12 in a horizontal position.

As illustrated in Fig. 3, the first battery modules 13FL, 13FR are arranged in an orientation such that electrode terminals 12a of the battery shells 12 which form the left first battery module 13FL mutually face the electrode terminals 12a of the battery shells 12 which form the right first battery module 13FR (or in such a manner that both are oriented toward the center in the vehicle width direction).

Also, as illustrated in Fig. 3, the rear third battery module 13R is arranged in such a manner that all electrode terminals 12a of the battery shells 12 face toward the vehicle front.

Further, as illustrated in Fig. 3, the central left and right second battery modules 13CL, 13CR are arranged in an orientation such that the electrode terminals 12a of the battery shells 12 which form the left second battery module 13CL mutually face the electrode terminals 12a of the battery shells 12 which form the right second battery module 13CR (or in such a manner that both are oriented toward the center in the vehicle width direction).

Then, as illustrated in Figs. 2 and 3, the electrode terminals 12a of the battery shells 12 which form the battery modules 13FL, 13FR, 13CL, 13CR, 13R are connected via a power supply cable to a motor power feeder 15 from the electric motor (or an inverter) in the motor room 3. The power supply cable is routed in a central space in the vehicle width direction between the front left and right first battery modules 13FL, 13FR, and in a central space in the vehicle width direction between the central left and right second battery modules 13CL, 13CR.

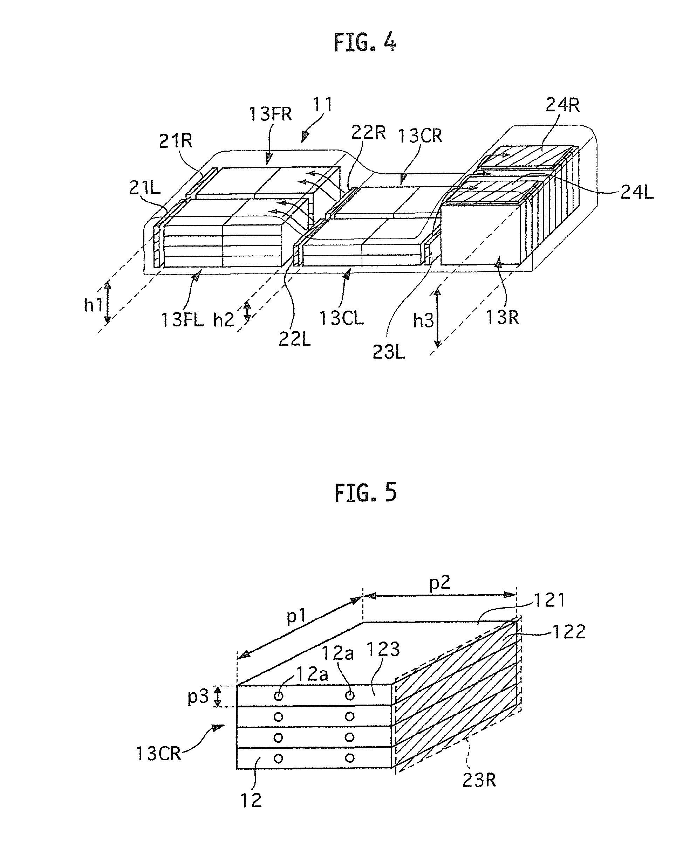

Fig. 4 is a schematic perspective view of the battery shells. A configuration is such that the following relationship is established: h3 > h1 > h2, where h1 denotes the height of the first battery modules 13FL, 13FR (hereinafter, sometimes described as the first battery modules 13F) when mounted on the vehicle; h2, the height of the second battery modules 13CL, 13CR (hereinafter, sometimes described as the second battery modules 13C) when mounted on the vehicle; and h3, the height of the third battery module 13R when mounted on the vehicle.

The first battery modules 13F are located below the left and right front seats 6, and the third battery module 13R is located below the left and right rear seats 7. Therefore, the above-mentioned heights h1, h3 are set greater than the height h2 thereby to enable effective utilization of a space below the seats in the vehicle interior 2 as a mounting space for the battery shells 12 and hence mounting of many batteries without impairing the comfort of the vehicle interior 2. Also, the height h3 is greater than the height h1, and thus, in the vehicle interior 2, the seat surfaces of the rear seats 32R are higher than the seat surfaces of the front seats 32F. This setting enables ensuring good visibility of passengers on the left and right rear seats 7.

In the embodiment, here, the total number of the battery shells 12 of the first battery modules 13F and the second battery modules 13C is the same as the total number of the battery shells 12 of the third battery module 13R. Meanwhile, in a plan view of the vehicle, an area occupied by the third battery module 13R is smaller than an area occupied by the first battery modules 13F and the second battery modules 13C.

Thus, the center of gravity of the battery pack 11 is located on a relatively rear side of the vehicle in the vehicle longitudinal direction. The electric motor for traveling or the like is arranged in the vehicle front, and thus, the center of gravity of the battery pack 11 is arranged on a relatively rear side of the vehicle and thereby the weight distribution of the vehicle taken as a whole can be brought close to the center position in the longitudinal direction. This enables ensuring stability of vehicle behavior.

Description will now be given with regard to a configuration of the battery shell 12. Fig. 5 is a schematic view representing the second battery module. The battery shell 12 is formed substantially in the shape of a rectangular parallelepiped and has a long side p1, a short side p2, and a height side p3, the lengths of which are configured such that the following relationship is established: p1 > p2 > p3. The battery shell 12 has a flat surface 121 surrounded by the long side p1 and the short side p2, a long side surface 122 surrounded by the long side p1 and the height side p3, and a short side surface 123 surrounded by the short side p2 and the height side p3. Then, the electrode terminals 12a are provided on the short side surface 123.

The first battery module 13F and the second battery module 13C are arranged with the short side p2 of the battery shell 12 along the vehicle longitudinal direction. The first battery module 13F and the second battery module 13C are modules arranged in a region where restrictions on their height direction are relatively stricter than restrictions on their width direction. Therefore, even if the battery modules are arranged with the long side p1 along the vehicle width direction, a space between the left and right battery modules can be ensured to thus facilitate wiring or the like. Also, the packing density of the battery shells 12 can be increased by arranging the battery modules with the short side p2 along the vehicle longitudinal direction. Also, the height of the battery modules can be adjusted in fine increments by arranging the battery modules with the height side p3 of the shortest length along a vehicle vertical direction.

In other words, there are various limitations on the vehicle vertical direction, depending on the vehicle; however, in a case where the battery shells 12 have their own common configuration, the height can be adjusted by how the battery shells 12 are stacked one on top of another. Therefore, the battery shells 12 can be efficiently mounted by setting the unit of adjustment in fine increments.

The third battery module 13R is arranged with the height side p3 of the battery shell 12 along the vehicle width direction. Thereby, the number of the battery shells 12 stacked can be adjusted in fine increments, and thus, many battery shells 12 can be arranged by effective utilization of a space below the left and right rear seats 7.

### [Regarding Thin heater module]

Next, description will be given below with reference to Figs. 2 and 3 with regard to thin heater modules (or heater modules) for heating the battery modules for anti-freezing or other purposes under unused conditions. Incidentally, in Figs. 2 and 3, the thin heater modules are represented by hatching for the sake of convenience for clarity. The thin heater module is what is called a PTC heater, which increases its temperature to a predetermined temperature by the passage of electric current therethrough and then changes in resistance value so as to maintain the temperature. A configuration is such that a combination of the PTC heater and a uniform heat plate for uniformly distributing heat enables uniform heating of a set area range. Incidentally, a method in which a nichrome wire is arranged in a meandering fashion, a method in which hot water is circulated along a predetermined flow path, or the like, for example, may be applied to the heater, and the heater in itself is not particularly limited.

As represented by the diagonally shaded area in Fig. 5, thin heater modules 23L, 23R are provided in close proximity to the long side surfaces 122 of the battery shells 12. In other words, efficient heating of the overall battery module requires uniform heat transfer to the stacked battery shells 12. If the thin heater module is provided on the flat surface 121, only the battery shell 12 stacked at an upper end or a lower end in close proximity to the thin heater module is heated, and the battery shells 12 stacked in a central portion in the vertical direction are insufficiently heated, which in turn renders it difficult to achieve stabilization of performance.

Also, in a case where the thin heater module is provided on the short side surfaces 123, all battery shells 12 can be heated; however, there arises the problem of low heating efficiency because of a small area facing the thin heater module.

In the embodiment, therefore, the thin heater modules 23L, 23R are provided facing the long side surfaces 122 thereby to achieve an improvement in the heating efficiency, as well as uniform heating of all battery shells 12.

As previously mentioned, the front left and right first battery modules 13FL, 13FR are each formed of a four-layer stacking of the battery shells 12 and have a large heat capacity. On the other hand, as previously mentioned, the central left and right second battery modules 13CL, 13CR are each formed of a two-layer stacking of the battery shells 12 and have a small heat capacity and are thus prone to decrease in temperature.

In the embodiment, therefore, as illustrated in Figs. 2 and 3, the front left and right first battery modules 13FL, 13FR are provided with thin heater modules 21L, 21R arranged only in front of the first battery modules 13FL, 13FR. Also, the central left and right second battery modules 13CL, 13CR are provided with thin heater modules 22L, 22R arranged in front of the second battery modules 13CL, 13CR, and are also provided with the thin heater modules 23L, 23R arranged behind the second battery modules 13CL, 13CR. Incidentally, the reason why the thin heater modules 21L, 21R are arranged only in front of the first battery modules 13 is because the front is susceptible to traveling wind or the like and is relatively prone to cooling. Also, cost reduction can be achieved by narrowing an installation region for the thin heater modules.

Incidentally, air warmed by the thin heater modules 22, which heat the second battery modules 13C, moves upward as indicated by arrows of Fig. 4. The warm air can also heat the first battery modules 13F. Likewise, air warmed by the thin heater modules 23, which heat the second battery modules 13C, moves upward. The warm air can also heat the third battery module 13R. In other words, the second battery modules 13C are located at a position lower than the other battery modules, and thus, the relative positions of these are utilized to heat also the other battery modules.

The rear third battery module 13R is different in stacking direction from the first battery module 13F and the second battery module 13C. Here, the long side surface 122 is located toward an upper surface of the vehicle, and thus, thin battery heaters 24 are also arranged on the upper surface side of the vehicle. In this case, the third battery module 13R has a larger number of the battery shells 12 stacked than the front left and right first battery modules 13FL, 13FR and has the largest heat capacity and thus is less likely to decrease in temperature. However, the side surface side in the vehicle width direction is relatively susceptible to traveling wind or the like, and the third battery module 13R is least likely to be cooled near the center in the vehicle width direction. Thus, the rear third battery module 13R is provided with the thin heater modules 24L, 24R arranged only above the third battery module 13R in both end regions thereof in the stacking direction of the battery shells 12.

More specifically, when three regions divided in the stacking direction are set, the thin heater modules 24L, 24R are installed in both end regions and are not installed in a central region. Thereby, even if the installation region for the thin heater modules becomes narrow, the third battery module 13R can be efficiently heated throughout its entire area. Also, the cost reduction can be achieved by narrowing the installation region for the thin heater modules.

The thin heater modules 21L, 21R are arranged in a standing position in close proximity to the front of the front left battery module 13FL and the front right battery module 13FR, respectively, and are mounted on a battery module mounting surface 14a of the battery pack case 14.

The thin heater modules 22L, 22R are arranged in close proximity to the front of the central left battery module 13CL and the central right battery module 13CR, respectively, and are mounted on the battery module mounting surface 14a of the battery pack case 14. The thin heater modules 23L, 23R are arranged in close proximity to the rear of the central left battery module 13CL and the central right battery module 13CR, respectively, and are mounted on the battery module mounting surface 14a of the battery pack case 14.

The thin heater modules 24L, 24R are located above and in close proximity to the rear battery module 13R at both ends thereof in the stacking direction of the battery shells, and are mounted on the battery module mounting surface 14a of the battery pack case 14.

Incidentally, as previously mentioned, the battery power supply cable is routed in the central space in the vehicle width direction between the front left and right battery modules 13FL, 13FR, and in the central space in the vehicle width direction between the central left and right battery modules 13CL, 13CR. It is therefore desirable that electrode terminals of the thin heater modules 21L, 21R, 22L, 22R, 23L, 23R, 24L, 24R be installed on the side close to the central space in the vehicle width direction between the front left and right battery modules 13FL, 13FR, and close to the central space in the vehicle width direction between the central left and right battery modules 13CL, 13CR.

Therefore, the electrode terminals of the thin heater modules 21L, 21R arranged in a standing position in close proximity to the front of the front left battery module 13FL and the front right battery module 13FR, respectively, are arranged in end portions, close to each other, of the thin heater modules 21L, 21R. Also, the electrode terminals of the thin heater modules 23L, 23R arranged in a standing position in close proximity to the rear of the central left battery module 13CL and the central right battery module 13CR, respectively, are arranged in end portions, close to each other, of the thin heater modules 23L, 23R.

Therefore, the thin heater modules 21L, 21R and the thin heater modules 23L, 23R can be configured in the form of flat plate, as illustrated in Figs. 2 and 3.

Here, the electrode terminals of the thin heater modules 21L, 21R can be arranged in the manner as above described, because there are no battery modules adjacent to the front of the front left battery module 13FL and the front right battery module 13FR and thus a space for installation of the electrode terminals can be ensured around the end portions, close to each other, of the thin heater modules 21 L, 21 R.

Also, the electrode terminals of the thin heater modules 23L, 23R can be arranged in the manner as above described, because there are no battery modules adjacent to the rear of the central left battery module 13CL and the central right battery module 13CR and thus a space for installation of the electrode terminals can be ensured around the end portions, close to each other, of the thin heater modules 23L, 23R.

Advantageous effects of the embodiment will be described below.
(1) The battery module includes the battery module 13 including the plural battery shells 12 stacked one on top of another and each having the shape of a rectangular parallelepiped having three sides, and the thin heater modules 21, 22, 23, 24 each arranged in such a way as to face a side surface including a side along the stacking direction, of the battery module 13, and each configured to heat the battery module 13.

Specifically, the thin heater modules 21, 22, 23, 24 are each provided in such a way as to face the side surface including the side along the stacking direction. Thereby, all battery shells 12 are uniformly heated, and also, heating takes place inside the battery pack case 14 to thus enable achieving an improvement in heating efficiency.

(2) The battery shells 12 each have the shape of a rectangular parallelepiped having the long side p1, the short side p2, and the height side p3 shorter than the long side p1 and the short side p2, and the stacking direction is a direction along the height side p3, and the thin heater modules 21, 22, 23, 24 are each arranged in such a way as to face the long side surface 122 as a side surface including the long side p1.

Specifically, the battery shells 12 are stacked in the direction along the shortest height side p3, and thereby, length adjustment of the battery module 13 in the direction along the height side p3 can be set in fine increments to thus enable efficient mounting on the vehicle. Also, the thin heater modules are each arranged in such a way as to face the long side surface 122 thereby to enable achieving the improvement in the heating efficiency, as well as uniform heating of all battery shells 12.

(3) The battery module 13 includes the first battery module 13F located below the front seat and having the first height h1, the second battery module 13C located below the floor panel at the foot of the rear seat between the front seat and the rear seat and having the second height h2, and the third battery module 13R located below the rear seat and having the third height h3, which are arranged below the floor panel of the vehicle in order from the vehicle front, and the second height h2 is less than the first and third heights h1, h3.

This enables effective utilization of the space below the seats in the vehicle interior 2 as the mounting space for the battery shells 12 and hence mounting of many batteries without impairing the comfort of the vehicle interior 2.

(4) The thin heater module 21 is arranged in front of the first battery module 13F in the vehicle longitudinal direction.

Specifically, the first battery module 13F arranged in the vehicle front is susceptible to traveling wind or the like and is prone to cooling. Thus, installation in a cooling-prone location alone enables achieving cost reduction as well as ensuring heating performance. Incidentally, the first battery module 13F has a larger volumetric capacity and hence also a larger heat capacity, as compared to the second battery module 13C. Therefore, the vehicle rear side is relatively less likely to be cooled, and thus, sufficient heating performance can be achieved even if the thin heater module 21 is installed only in the vehicle front. Incidentally, the first battery module 13F is installed below the front seat, and thus, its height direction is difficult to ensure. Therefore, the battery shells 12 are stacked along the vehicle vertical direction and the long side surface 122 is arranged along the vehicle width direction, and thereby, the battery shells 12 can be efficiently arranged.

(5) The thin heater modules 22, 23 are arranged in front of and behind the second battery module 13C in the vehicle longitudinal direction.

Specifically, the second battery module 13C, although located in a central portion of the battery pack 11, has a smaller volumetric capacity and hence also a smaller heat capacity and is more prone to cooling, as compared to the other battery modules. Therefore, the thin heater modules 21 are arranged in both the front and rear sides in the vehicle longitudinal direction thereby to enable ensuring the heating performance. Incidentally, the second battery module 13F is installed below the floor panel at the foot of the rear seat arranged between the front seat and the rear seat, and thus, its height direction is difficult to ensure. Therefore, the battery shells 12 are stacked along the vehicle vertical direction and the long side surface 122 is arranged along the vehicle width direction, and thereby, the battery shells 12 can be efficiently arranged.

(6) The thin heater module 24 is arranged above the third battery module 13R in the vehicle vertical direction.

Specifically, the third battery module 13C is installed below the rear seat, and thus, restrictions on its height direction are relatively less strict. Therefore, the battery shells 12 are stacked in the vehicle width direction and the thin heater module 24 is installed above the stacked battery shells 12, and thereby, a sufficient space can be ensured in the vehicle width direction to thus enable efficient arrangement of the battery shells 12.

(7) The thin heater modules 24 are arranged in both end regions of the third battery module 13R in the vehicle width direction.

Specifically, the third battery module 13C has a larger volumetric capacity and hence also a larger heat capacity, as compared to the second battery module 13C. The center in the vehicle width direction, in particular, is unsusceptible to the outside air and does not tend to be cooled. Therefore, the thin heater modules 24 are installed in both end regions in the vehicle width direction, or equivalently, are not installed in the center region in the vehicle width direction, thereby to enable achieving sufficient heating performance as well as cost reduction.

Incidentally, the entire contents of Japanese Patent Application No. 2011-054086 (filed on March 11, 2011) are incorporated herein by reference.

Also, while the contents of the present invention have been described with reference to the form of the embodiment, it is to be understood that the present invention is not limited to the description, and it would be obvious to those skilled in the art that various modifications and improvements could be made thereto.

### INDUSTRIAL APPLICABILITY

According to the battery module according to the present invention, all battery shells are uniformly heated, and also, the battery shells are directly heated to thus enable achieving an improvement in heating efficiency.

### REFERENCE SIGNS LIST

- 1: vehicle body
- 2: vehicle interior
- 3: motor room
- 4: left and right front wheels
- 5: left and right rear wheels
- 6: front seat
- 7: rear seat
- 11: battery pack
- 12: battery shell
- 12a: electrode terminal
- 13FL: front left battery module (battery module)
- 13FR: front right battery module (battery module)
- 13CL: central left battery module (battery module)
- 13CR: central right battery module (battery module)
- 13R: rear battery module (battery module)
- 14: battery pack case
- 14a: battery module mounting surface
- 15: motor power feeder
- 21L, 22R, 22L, 22R, 23L, 23R: thin heater modules (heater modules)

## Claims

1. A battery module comprising:
a battery module including a plurality of battery shells each in the shape of a rectangular parallelepiped, stacked one on top of another; and
a heater module arranged in such a way as to face a side surface including a side along a stacking direction, of the battery module, and configured to heat the battery module.

2. The battery module according to claim 1, wherein
the battery shells each have the shape of a rectangular parallelepiped having a long side, a short side, and a height side shorter than the long side and the short side,
the stacking direction is a direction along the height side, and
the heater module is arranged in such a way as to face a side surface including the long side.

3. The battery module according to any one of claims 1 and 2, wherein
the battery module includes a first battery module located below a front seat and having a first height, a second battery module located below a floor panel at the foot of a rear seat between the front seat and the rear seat and having a second height, and a third battery module located below the rear seat and having a third height, which are arranged below the floor panel of a vehicle in order from the vehicle front, and
the second height is less than the first and third heights.

4. The battery module according to claim 3, wherein the heater module is arranged in front of the first battery module in a vehicle longitudinal direction.

5. The battery module according to any one of claims 3 and 4, wherein the heater modules are arranged in front of and behind the second battery module in the vehicle longitudinal direction.

6. The battery module according to any one of claims 3 to 5, wherein the heater module is arranged above the third battery module in a vehicle vertical direction.

7. The battery module according to claim 6, wherein the heater modules are arranged in both end regions of the third battery module in a vehicle width direction.
